# FASCICULE DE BREVET EUROPEEN

(11) **EP 4 133 440 B1**
(45) Date de publication et mention de la délivrance du brevet: **11.02.2026**
(21) Numéro de dépôt: 21715642.1
(22) Date de dépôt: 01.04.2021
(51) Int. Cl.: G06Q 20/20, G06F 21/86, G06Q 20/32, G07F 7/08

(54) **DISPOSITIF DE PAIEMENT ÉLECTRONIQUE PRÉSENTANT DES MOYENS DE BLOCAGE DE L'ACCÈS À UN MODULE DE MÉMORISATION DE DONNÉES**
ELEKTRONISCHE BEZAHLVORRICHTUNG MIT MITTELN ZUR ZUGRIFFSBLOCKIERUNG AUF EIN DATENSPEICHERMODUL
ELECTRONIC PAYMENT DEVICE WITH MEANS FOR BLOCKING ACCESS TO A DATA STORAGE MODULE

(30) Priorité: 10.04.2020 FR 2003657
(43) Date de publication de la demande: 15.02.2023
(73) Titulaire: Banks and Acquirers International Holding, 75015 Paris (FR)
(72) Inventeur: GOULON, Maxime, 26300 CHATUZANGE-LE-GOUBET (FR); ANDRE, Jérôme, 26800 MONTOISON (FR); SOUBIRANE, Alain, 26500 BOURG-LES-VALENCE (FR)
(74) Mandataire: LLR
(86) Numéro de dépôt international: PCT/EP2021/058589
(87) Numéro de publication internationale: WO 2021/204658

(56) Documents cités:
- EP-A1- 2 800 073
- EP-A2- 2 824 619
- WO-A1-2016/086968
- US-A1- 2004 255 141

## Description

### 1. Domaine technique

Le domaine de l'invention est celui des dispositifs de paiement, et notamment des terminaux de paiement électronique mobiles.

### 2. Art Antérieur

A l'heure actuelle, les terminaux de paiement sont majoritairement utilisés pour permettre le règlement des achats de biens et de services au sein de points de vente. Ces terminaux comprennent généralement un lecteur de carte à puce et/ou un lecteur de carte magnétique. Ils comprennent également un écran, permettant notamment de visualiser des informations, telles que les montants des transactions, et un clavier de saisie de ces mêmes montants ainsi que de saisie des codes confidentiels des clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'une autorisation de débit.

Par exemple, lorsqu'il est connecté à une caisse enregistreuse, le terminal de paiement transmet les données de l'opération effectuée à la caisse enregistreuse (lorsqu'il s'agit d'une caisse enregistreuse intelligente). Cette caisse enregistreuse enregistre dans un journal (ou journalise) les transactions de paiement (qu'il s'agisse de transactions à l'aide du terminal de paiement, de transactions par chèque ou encore de transactions en monnaie fiduciaire). Il arrive cependant qu'une telle caisse enregistreuse ne fonctionne pas ou mal. Ceci n'a heureusement pas pour conséquence de bloquer le paiement effectué sur le terminal de paiement. En revanche, la journalisation des paiements peut être erronée, ce qui peut poser problème, par exemple aux autorités en charge du recouvrement des créances fiscales. Par ailleurs, des commerçants peu scrupuleux peuvent rendre les caisses enregistreuses inopérantes dans le seul but de frauder les autorités en charge du recouvrement des créances fiscales. Ces pratiques ont notamment été observées dans certains pays dans lesquels la pression fiscale est peu facilement admise.

Parmi les solutions existantes visant à pallier ce type de fraude, la solution la plus répandue consiste à intégrer, à l'intérieur du terminal de paiement électronique, un module de mémorisation cumulatif de données relatives aux transactions effectuées. Ce module de mémorisation cumulatif est conçu de manière à ce que les données qu'il contient ne puissent pas être effacées. Ces données, historiées dans le module de mémorisation cumulatif, correspondent par exemple aux montants des transactions effectuées dans la journée par le commerçant, associés aux montants correspondants de la TVA (pour Taxe sur la Valeur Ajoutée) ou de toute autre taxe en vigueur.

Il est également connu de sécuriser et d'interdire tout accès au module de mémorisation cumulatif, et aux données qu'il contient, en le disposant dans un logement ménagé dans une enceinte sécurisée située à l'intérieur du terminal de paiement électronique et en obturant le logement, après insertion du module de mémorisation cumulatif, par des moyens de blocage définitif (ou irréversible), telle une résine.

Une telle solution permet de protéger efficacement le module de mémorisation cumulatif, et d'assurer l'intégrité des données qu'il contient.

Néanmoins, certaines règlementations nationales imposent, en complément du module de mémorisation cumulatif définitivement solidarisé au sein du terminal de paiement électronique, la mise en œuvre d'un deuxième module de mémorisation.

Plus précisément, contrairement au module de mémorisation cumulatif qui est configuré pour historier uniquement les informations de cumul de TVA journalier et le nombre de transactions réalisées, le deuxième module de mémorisation est configuré pour historier l'ensemble des données contenues sur un ticket de caisse. En d'autres termes, pour une même transaction, le deuxième module de mémorisation historie davantage de données que le module de mémorisation cumulatif. Cela se traduit par une saturation du deuxième module de mémorisation plus rapide que celle du module de mémorisation cumulatif.

De ce fait, les règlementations nationales imposent que ce deuxième module de mémorisation, situé dans une enceinte non sécurisée du terminal électronique de paiement, soit configuré pour être amovible (ou extractible) de sorte à permettre le remplacement d'un deuxième module de mémorisation saturé par un deuxième module de mémorisation vierge.

De telles réglementations engendrent cependant des exigences de sécurisation de l'intégrité des données contenues dans le module de mémorisation amovible.

En effet, le module de mémorisation amovible étant disposé dans une enceinte non sécurisée du terminal de paiement électronique, une personne malintentionnée peut aisément extraire ce module de mémorisation amovible pour tenter d'accéder aux données contenues dans celui-ci afin de les modifier.

Qui plus est, après extraction du module de mémorisation amovible, une personne malintentionnée, ayant accès à des pistes couplées au processeur principal de la carte mère du terminal de paiement électronique, pourrait également tenter de corrompre le fonctionnement de la partie fiscale de ce terminal notamment via l'utilisation d'un dispositif et/ou logiciel malveillant.

EP 2 800 073 A1 divulgue un terminal de paiement électronique comprenant un logement, situé dans une enceinte intérieure non-sécurisée, à l'intérieur duquel est disposé un module de mémorisation de données.

Il existe donc un besoin de solutions techniques permettant d'assurer la protection d'un module de mémorisation amovible, au moins lorsque celui-ci est disposé dans une enceinte non sécurisée du terminal de paiement électronique tout en étant conformes à certaines réglementations nationales.

### 3. Résumé de l'invention

La technique proposée se rapporte à un terminal de paiement électronique comprenant un boîtier présentant un logement à l'intérieur duquel est disposé un premier module amovible de mémorisation de données relatives à au moins une transaction effectuée via le terminal, le terminal présentant en outre des moyens amovibles de blocage d'accès au premier module amovible de mémorisation et un dispositif d'authenticité couvrant au moins une partie des moyens amovibles de blocage d'accès au premier module amovible de mémorisation, tel que défini dans la revendication indépendante 1.

La mise en œuvre d'une telle combinaison de moyens amovibles de blocage et d'un dispositif d'authenticité permet un accès simplifié au module amovible de mémorisation, et aux données qu'il contient, et ce tout en proposant un niveau élevé de protection de ces données. Cette solution est notamment très avantageuse pour les autorités en charge des créances fiscales, qui utilisent les données de transaction mémorisées dans les terminaux de paiement électronique et requièrent que ces données ne puissent pas être falsifiées. Ainsi, grâce à la solution technique proposée, dès lors que les moyens amovibles de blocage et le dispositif d'authenticité sont assemblés au terminal de paiement électronique, il est nécessaire de détruire le dispositif d'authenticité pour tenter d'extraire les moyens amovibles de blocage d'accès au module amovible de mémorisation afin d'accéder au module amovible de mémorisation lui-même.

De cette manière, la vérification de l'état physique du dispositif d'authenticité (présence, absence, détérioration, etc.) permet aux autorités en charge du recouvrement des créances fiscales d'identifier aisément un terminal de paiement électroniques dont le module amovible de mémorisation aurait fait l'objet d'une tentative frauduleuse d'accès. Selon un mode de réalisation particulier, les moyens amovibles de blocage comprennent :
- un capot amovible de fermeture du logement de sorte à empêcher l'accès au module amovible de mémorisation, et
- un organe de verrouillage amovible configuré pour verrouiller le capot amovible en position de fermeture, l'organe de verrouillage étant solidarisé au boîtier par des moyens réversibles de fixation.

Une telle structure de moyens de blocage, simple de conception, permet d'assurer efficacement la protection du module amovible de mémorisation. La mise en œuvre d'une pluralité d'éléments permet de complexifier l'accès au module amovible de mémorisation. Par ailleurs, de tels moyens amovibles de blocage ne nécessitent pas l'utilisation d'outils spécifiques autres que ceux couramment à disposition des autorités.

Selon un mode de réalisation particulier, le dispositif d'authenticité couvre au moins une partie des moyens réversibles de fixation de l'organe de verrouillage au boîtier.

Ainsi, la destruction du dispositif d'authenticité est un préalable indispensable à l'extraction des moyens réversibles de fixation, et donc à l'accès au module amovible de mémorisation de données fiscales.

Selon un mode de réalisation particulier, le terminal de paiement électronique comprend un organe de commutation du fonctionnement du terminal, et en ce que les moyens amovibles de blocage bloquent l'accès à l'organe de commutation.

Par exemple, l'organe de commutation permet au terminal de paiement d'être basculé depuis un mode d'utilisation, pour la réalisation d'opérations transactionnelles, vers un mode de maintenance, pour la réalisation d'opérations de tests et de mises à jour par exemple.

Il apparaît donc qu'un tel agencement permet aux moyens amovibles de blocage de protéger en outre l'accès à des fonctionnalités spécifiques du terminal de paiement ne devant pas être accessibles par les tiers.

Selon l'invention, le boîtier définit un espace intérieur comprenant au moins une enceinte intérieure sécurisée, par des moyens de détection d'intrusion, et une enceinte intérieure non-sécurisée, et en ce que le logement est situé dans l'enceinte intérieure non-sécurisée.

Les deux enceintes intérieures sont dissociées l'une de l'autre de manière à ce qu'un tiers puisse accéder librement à l'enceinte intérieure non-sécurisée sans engendrer l'activation des moyens de détection d'intrusion classiquement mis en œuvre dans un terminal de paiement électronique (ayant pour conséquence la mise en sécurité du terminal rendant celui-ci inopérant). Ainsi, l'extraction des moyens amovibles de blocage, et l'accès au module amovible de mémorisation, ne perturbe pas le fonctionnement du terminal de paiement. Une telle configuration trouve une application particulièrement avantageuse lorsque le terminal de paiement comprend au moins un autre module de mémorisation de données fiscales disposé, quant à lui, dans l'enceinte intérieure sécurisée.

Selon un mode de réalisation particulier, au moins un moyen amovible de blocage, dit moyen amovible de blocage externe, est rapporté sur l'extérieur du boîtier, et en ce que le dispositif d'authenticité couvre au moins une partie dudit au moins un moyen amovible de blocage externe.

En d'autres termes, au moins un des moyens amovibles de blocage, un organe de verrouillage et un moyen de fixation réversible de celui-ci par exemple, est positionné sur la surface extérieure d'une paroi du boîtier et est au moins partiellement recouvert par le dispositif d'authenticité.

Ainsi, le dispositif d'authenticité est visible depuis l'extérieur du terminal de paiement. Une telle configuration permet, aux autorités en charge du recouvrement des créances fiscales notamment, d'identifier rapidement un terminal de paiement ayant fait l'objet d'un accès frauduleux, ou du moins d'une tentative frauduleuse, au module amovible de mémorisation.

Selon un mode de réalisation particulier, le boîtier définit un espace intérieur, et en ce que les moyens amovibles de blocage et le dispositif d'authenticité sont disposés dans l'espace intérieur.

Une telle disposition permet aux moyens amovibles de blocage et au dispositif d'authenticité d'être intégralement localisés dans l'enceinte intérieure non-sécurisée du terminal. De ce fait, lorsque cette enceinte est refermée, par une trappe amovible notamment, les moyens amovibles de blocage et le dispositif d'authenticité ne sont plus visibles.

Par ailleurs, une telle disposition permet de s'affranchir d'ouvertures ménagées sur les parois du boîtier, pouvant fragiliser la structure du terminal de paiement dans son ensemble. Une telle disposition permet en outre de s'affranchir, lorsque aucun module amovible de mémorisation n'est présent dans l'enceinte intérieure non-sécurisée du terminal de paiement, de moyens d'obturation de ces ouvertures. Ainsi, un tel agencement permet d'améliorer la protection du terminal de paiement.

Selon un mode de réalisation particulier, le dispositif d'authenticité est un dispositif mécanique, tel un plomb estampillé d'une empreinte particulière.

La mise en œuvre d'un tel dispositif d'authenticité permet, lors de l'opération d'estampillage, de solidariser, par effet de déformation, le plomb aux moyens de fixation réversible, à savoir à la tête de vis. Ainsi, la destruction du dispositif d'authenticité est un préalable indispensable à l'extraction de la vis de fixation, et donc à l'accès au module amovible de mémorisation de données fiscales.

Un tel dispositif d'authenticité mécanique est une solution simple et efficace permettant d'assurer, à moindre coût, l'authenticité du montage des moyens amovibles de blocage d'accès au module de mémorisation de donnée fiscales.

### 4. Liste des figures

D'autres caractéristiques et avantages de l'invention apparaîtront plus clairement à la lecture de la description suivante, donnée à titre de simple exemple illustratif et non limitatif, et des dessins annexés, parmi lesquels :
[Fig. 1] : la figure 1 représente, de dessous et en perspective, un exemple de terminal de paiement électronique, dépourvu des moyens de blocage selon la technique proposée, permettant de localiser le module de mémorisation ;
[Fig. 2] : la figure 2 représente, de dessous et en perspective, le terminal de paiement électronique de la figure 1 équipé des moyens de blocage selon la technique proposée ;
[Fig. 3A] et [Fig. 3B] : les figures 3A et 3B illustrent, de dessus et en perspective respectivement, et de manière isolée, un capot appartenant aux moyens de blocage selon la technique proposée ;
[Fig. 4] : la figure 4 illustre, en perspective et de manière isolée, un organe de verrouillage appartenant aux moyens de blocage selon la technique proposée ;
[Fig. 5] : la figure 5 présente, sous forme d'organigramme, les étapes principales de montage des moyens de blocage selon la technique proposée ;
[Fig. 6A] à [Fig. 6D] : les figures 6A à 6D présentent les étapes principales de montage du capot illustré en figures 3A et 3B ;
[Fig. 7] : la figure 7 présente les principaux éléments de montage de l'organe de verrouillage de la figure 4 ;
[Fig. 8] : la figure 8 représente, en perspective surélevée, le terminal de paiement électronique après montage des moyens de blocage selon la technique proposée ; et
[Fig. 9] : la figure 9 représente, en perspective surélevée, un terminal de paiement électronique dépourvu des moyens de blocage selon la technique proposée.

### 5. Description détaillée de l'invention

Par souci de clarté, de mêmes éléments ont été désignés par de mêmes références sur les différentes figures.

Par ailleurs, on utilise dans la présente description les termes d'orientation et de positionnement "inférieur", "supérieur", "avant", "arrière" en se référant arbitrairement à une position normale d'utilisation d'un terminal de paiement électronique mobile, dans laquelle le clavier et l'écran du terminal sont disposés sur la face avant et dont le clavier, disposé au moins sur la portion inférieure du terminal, est orienté vers l'utilisateur. On utilise en outre les termes "transversal" et "longitudinal", en se référant à des directions respectivement approximativement orthogonales aux faces latérales du terminal, et approximativement orthogonales aux faces avant et arrière du terminal.

### 5.1 Principe général

Comme déjà indiqué ci-dessus, on connaît des terminaux de paiement électroniques présentant deux modules de mémorisation de données de transactions (comme par exemple des montants de transactions), à savoir un premier module monté de manière irréversible dans une enceinte sécurisée du terminal de paiement électronique, et un deuxième module monté de manière amovible dans une enceinte non sécurisée de ce même terminal.

Les inventeurs de la présente demande ont constaté qu'une telle structure de terminal de paiement électronique, et plus précisément la mise en œuvre d'un module de mémorisation amovible dans une enceinte non sécurisée, pouvait engendrer des risques quant à l'intégrité des données, fiscales notamment, contenues sur ce module.

Au prix d'une démarche non évidente, les inventeurs de la présente demande ont identifié une technique nouvelle et inventive protégeant l'accès au module de mémorisation amovible et ce, tout en permettant aux autorités d'identifier rapidement une tentative frauduleuse d'accès à ce module de mémorisation amovible en vue d'accéder à ses données.

Le principe général de la technique proposée consiste à bloquer l'accès à un logement contenant un premier module de mémorisation, amovible, de données relatives aux transactions effectuées avec ce terminal (par exemple des données fiscales), par la mise en œuvre d'une combinaison de moyens amovibles de blocage d'accès au module de mémorisation et d'un dispositif d'authenticité couvrant au moins une partie ces moyens amovibles de blocage.

### 5.2 Description d'un mode de réalisation

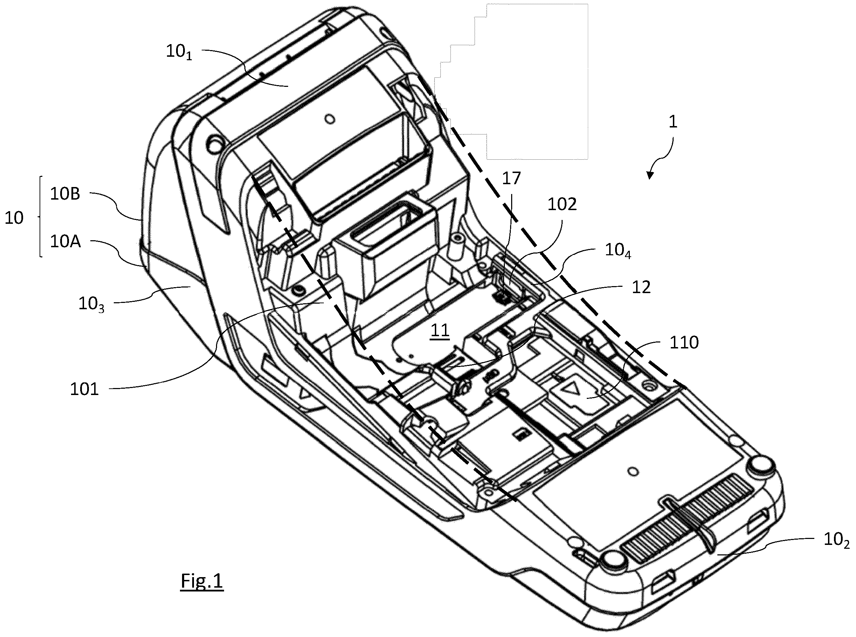

La **figure 1** illustre, de dessous et en perspective, un terminal de paiement électronique mobile duquel ont été extraits les moyens de blocage selon la technique proposée afin de permettre la visualisation d'un premier module de mémorisation de données (par exemple fiscales) relatives aux transactions effectuées avec ce terminal, et du logement dans lequel ce module de mémorisation de données est disposé.

Classiquement, le terminal de paiement électronique 1 intègre un clavier comprenant des touches pour la saisie des données, un écran pour la visualisation des données, des moyens de lecture des données du moyens de paiement de l'utilisateur (lecteur de carte à puce, lecteur de carte à bande magnétique et/ou lecteur sans contact), et un circuit imprimé pilotant le fonctionnement du terminal, ces éléments n'étant pas illustrés dans la présente demande de brevet.

Par ailleurs, le terminal 1 comprend un boîtier 10 définissant un espace intérieur dans lequel sont disposés les composants électroniques assurant le fonctionnement du terminal. Cet espace intérieur est, de manière connue, séparé en au moins deux enceintes distinctes, à savoir une enceinte intérieure sécurisée (non visible sur la figure 1) et une enceinte intérieure non-sécurisée 101. L'enceinte intérieure sécurisée, qui l'est par la mise en œuvre de moyens de détection d'intrusion (non visibles), intègre les composants électroniques devant être sécurisés, tel le circuit imprimé pilotant le fonctionnement du terminal notamment. Il est également connu que toute tentative frauduleuse d'accès à cette enceinte intérieure sécurisée entraine la mise en sécurité du terminal 1 empêchant le fonctionnement de celui-ci, suite au déclenchement des moyens de détection d'intrusion. L'enceinte intérieure non-sécurisée 101, accessible après extraction d'une trappe amovible, intègre les composants électroniques n'ayant pas vocation à être sécurisés, telle la batterie notamment. Une telle distinction des enceintes intérieures permet, par exemple, de remplacer une batterie sans mettre en sécurité le terminal de paiement.

Par ailleurs, le terminal 1 comprend un logement 11 destiné à recevoir un premier module de mémorisation 12 de données, par exemple fiscales, relatives aux transactions effectuées avec ce terminal 1. Il est important de noter que, dans ce mode de réalisation, le logement 11 est situé dans l'enceinte intérieure non-sécurisée 101 du terminal 1. Ainsi, le terminal 1 intègre une fonctionnalité de caisse enregistreuse, voire se substitue, pour des fonctions comptables et fiscales, à la caisse enregistreuse.

Le premier module de mémorisation 12 est amovible, c'est-à-dire configuré pour être extractible, sans détérioration, du logement 11.

Le terminal 1 comprend en outre un organe de commutation 17. Dans ce mode de réalisation, l'organe de commutation 17 est un bouton poussoir programmé pour modifier le fonctionnement du terminal 1, à savoir basculer le terminal 1 depuis un mode d'utilisation vers un mode de maintenance, et inversement. Dans ce mode de réalisation, l'organe de commutation 17 est également situé dans l'enceinte intérieure non-sécurisée 101 du terminal 1.

De plus, selon une variante de réalisation, le terminal 1 intègre un deuxième module de mémorisation de données (fiscales) relatives à au moins une transaction effectuée au moyen du terminal. Ce deuxième module de mémorisation (appelé module de mémorisation cumulatif dans le paragraphe 2 de la présente demande de brevet) est disposé dans l'enceinte intérieure sécurisée du terminal et est protégé par des moyens de blocage définitifs. Il n'est donc pas amovible.

Il est important de noter que le module amovible de mémorisation et ce deuxième module de mémorisation sont tous deux connectés au processeur principal de la carte mère du terminal de paiement électronique. L'enregistrement des données sur le module amovible de mémorisation et/ou sur le deuxième module de mémorisation, ainsi que la cohérence des données enregistrées, est assuré, par le biais d'un programme informatique dédié, par ce processeur principal.

Tel qu'illustré, le boîtier 10 comprend une demi-coque supérieure 10A jointe à une demi-coque inférieure 10B. Cette demi-coque inférieure 10B comprend la trappe amovible, dont seules certaines arêtes sont représentées en pointillés pour des raisons de clarté, permettant d'accéder à l'enceinte intérieure non-sécurisée 101 du terminal 1.

Le boîtier 10 présente, après jonction des demi-coques supérieure 10A et inférieure 10B, plusieurs parois 10₁, 10₂, 10₃ et 10₄ définissant les contours du terminal 1.

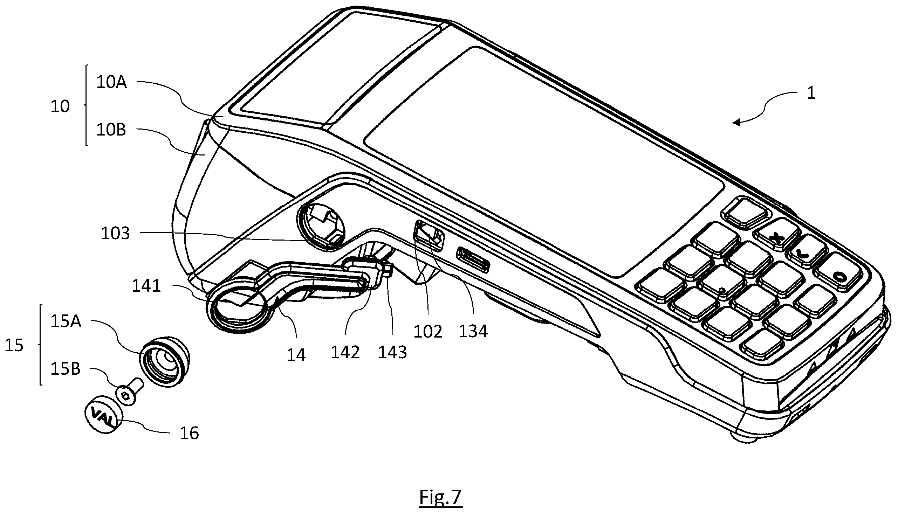

Par ailleurs, le boîtier 10 présente une première ouverture 102, dite de verrouillage, et une deuxième ouverture 103, dite de fixation, toutes deux ménagées dans une paroi latérale 10₄ commune, davantage visibles en figure 7. Comme cela apparaîtra plus clairement par la suite, les ouvertures 102 et 103 sont destinées à coopérer avec les moyens de blocage d'accès au premier module amovible de mémorisation 12.

En outre, le logement 11 de réception du premier module amovible de mémorisation 12 se présente sous la forme d'un renfoncement, par exemple en « L », ménagé dans la demi-coque inférieure 10B au sein de l'enceinte intérieure non-sécurisée 101 du terminal 1.

Le logement 11 présente une extrémité située en regard de l'ouverture 102 ménagée dans la paroi latérale du boîtier 10. Comme cela est détaillé ci-après, un tel agencement contribue également au blocage de l'accès au premier module amovible de mémorisation 12.

Par ailleurs, l'organe de commutation 17 est disposé dans le logement 11 au voisinage de l'extrémité en regard de l'ouverture 102. Ainsi, comme décrit plus en détail ci-dessous, lorsque que les moyens de blocage conformes à la technique proposée sont montés dans le terminal 1, l'organe de commutation 17 est inaccessible.

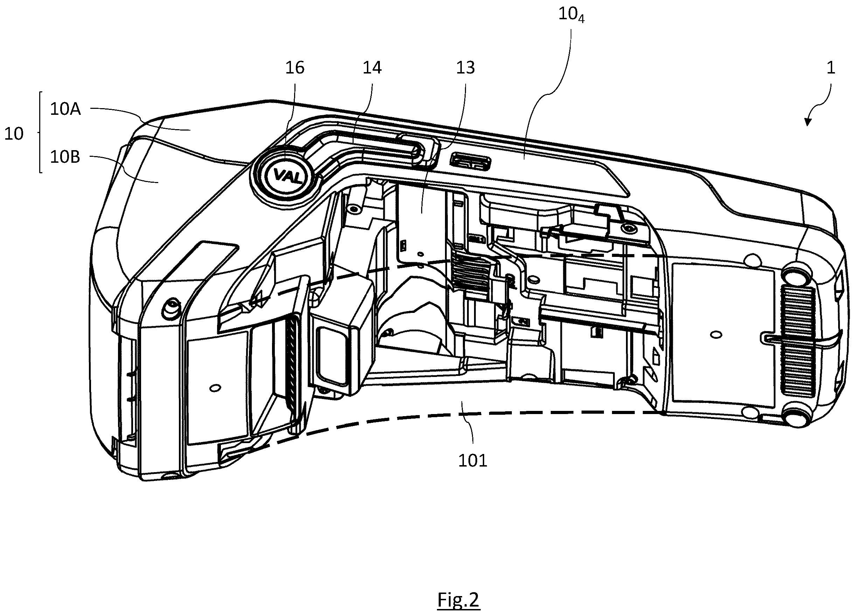

La **figure 2** illustre le terminal de paiement électronique mobile de la figure 1, sur lequel les moyens de blocage, conformes à la technique proposée, sont montés.

Les moyens de blocage 13, 14, 15 d'accès au premier module amovible de mémorisation 12 sont, conformément à la technique proposée, amovibles. L'extraction de tels moyens amovibles de blocage 13, 14, 15 est donc aisée notamment pour les autorités en charge du recouvrement des créances fiscales souhaitant, par exemple, accéder au premier module amovible de mémorisation 12, et aux données qu'il contient.

De plus, selon un autre aspect de la technique proposée, l'authenticité du montage des moyens amovibles de blocage 13, 14, 15 dans le terminal 1 de paiement est assurée par la mise en œuvre d'un sceau, également appelé dispositif d'authenticité 16, recouvrant au moins une partie des moyens amovibles de blocage 13, 14, 15.

Un tel dispositif d'authenticité 16 permet d'une part de dissuader une personne malintentionnée d'extraire les moyens amovibles de blocage 13, 14, 15 pour accéder au module amovible de mémorisation 12 et, d'autre part, de laisser une marque irréversible si une telle extraction frauduleuse des moyens amovibles de blocage venait à être effectuée. En effet, la destruction du dispositif d'authenticité 16 lors de, ou préalablement à, l'extraction des moyens amovibles de blocage 13, 14, 15 est indispensable pour accéder au module amovible de mémorisation 12. Les autorités en charge du recouvrement des créances fiscales peuvent donc aisément identifier un terminal 1 dont le module amovible de mémorisation 12 aurait fait l'objet d'une tentative frauduleuse d'accès.

La technique proposée repose donc sur une combinaison particulière des moyens amovibles de blocage 13, 14, 15, du module amovible de mémorisation, et du dispositif d'authenticité 16, recouvrant au moins une partie de ces moyens amovibles de blocage. Selon ce mode de réalisation et tel qu'illustré, les moyens amovibles de blocage comprennent un capot amovible 13 permettant la fermeture du logement 11 de sorte à empêcher l'accès au premier module amovible de mémorisation 12.

En position de fermeture, le capot amovible 13 recouvre le premier module amovible de mémorisation 12 disposé à l'intérieur du logement 11.

Les moyens amovibles de blocage comprennent en outre un organe de verrouillage 14 amovible configuré pour verrouiller le capot amovible 13 en position de fermeture.

L'organe de verrouillage 14 est rapporté sur l'extérieur de la paroi latérale 10₄ du boîtier 10 et coopère avec le capot amovible 13, via l'ouverture de verrouillage 102.

Par ailleurs, les moyens amovibles de blocage comprennent des moyens réversibles de fixation 15 (visibles en figure 7) permettant la solidarisation de l'organe de verrouillage 14 au boîtier 10 du terminal, via l'ouverture de fixation 103.

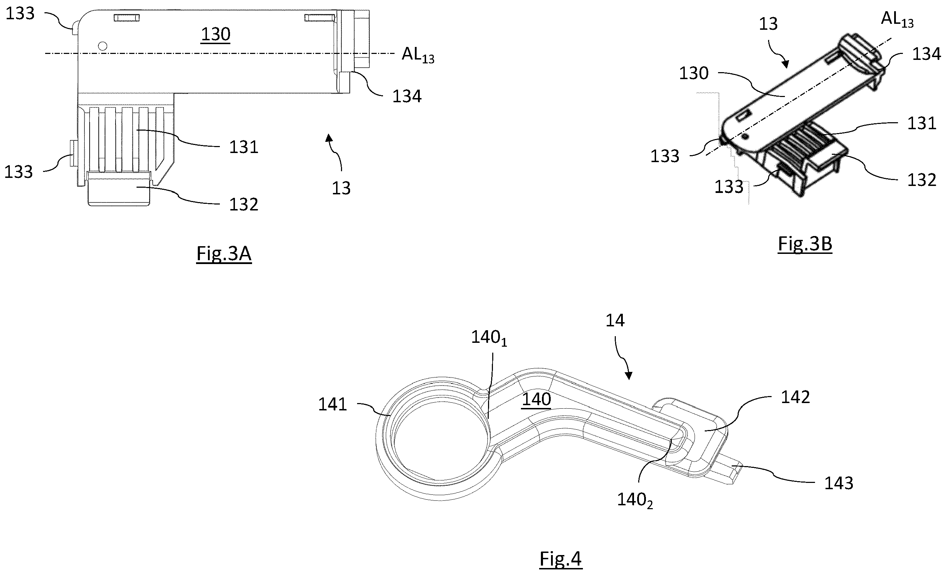

Les **figures 3A et 3B** illustrent un exemple de structure du capot amovible 13 appartenant aux moyens amovibles de blocage selon la technique proposée, permettant de fermer le logement à l'intérieur duquel est disposé le premier module de mémorisation.

Le capot 13, de forme complémentaire au logement 11, présente des dimensions inférieures à ce dernier, pour en simplifier l'insertion et l'extraction.

Tel qu'illustré, le capot 13 présente un corps principal 130 plan s'étendant selon un axe longitudinal AL₁₃ et une portion de recouvrement 131 configurée pour recouvrir, voire border, le premier module amovible de mémorisation 12. Cette portion de recouvrement 131 est portée par une extrémité du corps principal 130 et s'étend perpendiculairement à l'axe longitudinal AL₁₃ de celui-ci. Dans l'exemple illustré, la portion de recouvrement 131 présente une forme parallélépipédique rectangle. Bien évidemment, la forme et les dimensions de la portion de recouvrement 131 sont déterminées de manière à assurer la fonction de recouvrement du premier module amovible de mémorisation 12.

Par ailleurs, le capot 13 présente une languette de manipulation 132, située par exemple à une extrémité de la portion de recouvrement 131.

En outre, le capot 13 présente des moyens de retenue 133 permettant d'assurer le maintien du capot 13, en position fermée, à l'intérieur du logement 11 après insertion. Le logement 11 comprend des moyens de retenue (non visibles) complémentaires aux moyens de retenue 133 du capot 13. Les moyens de retenue 133 prennent par exemple la forme de deux saillies situées à une première extrémité longitudinale du capot 13 et prolongent celui-ci selon l'axe longitudinal AL₁₃. De telles saillies 133 permettent d'assurer aisément le maintien en position fermée du capot 13 dans le logement 11, grâce à un mouvement de coulissement du capot 13 dans le logement 11 jusqu'au couplage des moyens complémentaires de retenue.

Selon ce mode de réalisation, le capot 13 présente une butée 134, configurée pour coopérer avec une portion de l'organe de verrouillage 14, située à une deuxième extrémité longitudinale du capot 13, c'est-à-dire à l'extrémité opposée à celle des saillies 133. En outre, la butée 134 s'étend perpendiculairement au corps principal 130. Un tel agencement de la butée 134 permet, lorsque le capot 13 est disposé dans le logement 11, de recouvrir l'organe de commutation 17 et d'empêcher tout actionnement de celui-ci.

La **figure 4** illustre un exemple de structure d'un organe de verrouillage 14, appartenant aux moyens de blocage selon la technique proposée, permettant de verrouiller le capot 13 lorsque celui-ci ferme le logement 11 à l'intérieur duquel est disposé le premier module amovible de mémorisation 12.

L'organe de verrouillage 14 présente un corps principal 140 plan d'une forme épousant celle du terminal de paiement électronique à l'endroit où est positionné l'organe de verrouillage. Selon un mode de réalisation, le corps principal 140 se présente donc sensiblement en forme de « L », car le terminal de paiement électronique présente, de profil, une courbe à cet endroit. En effet, classiquement, un terminal de paiement électronique intègre dans cette zone un module d'impression (et notamment le rouleau de papier qui occupe un espace assez important) et présente donc une épaisseur plus importante dans sa portion supérieure, offrant ainsi une ergonomie optimisée (la partie supérieure du terminal de paiement électronique est surélevée en position d'utilisation). Le corps principal 140 présente une première extrémité 140₁, prolongée par un anneau de fixation 141 configuré pour recevoir des moyens de fixation réversible 15 (décrits ci-après), et une deuxième extrémité 140₂, prolongée par un cache 142 configuré pour recouvrir l'ouverture 101 ménagée dans la paroi latérale du boîtier 10 du terminal 1.

Par ailleurs, le cache 142 est prolongé, dans un plan parallèle, par un ergot 143 configuré pour maintenir le capot 13 en position de fermeture.

Comme cela sera davantage détaillé ultérieurement, l'ergot 143, après avoir été introduit dans l'ouverture de verrouillage 102, coopère avec la butée 134 pour verrouiller le capot 13 en position de fermeture et donc empêcher tout déplacement de celui-ci. L'ergot 143 est en outre configuré pour maintenir l'organe de verrouillage 14 en position après avoir été solidarisé au boîtier 10.

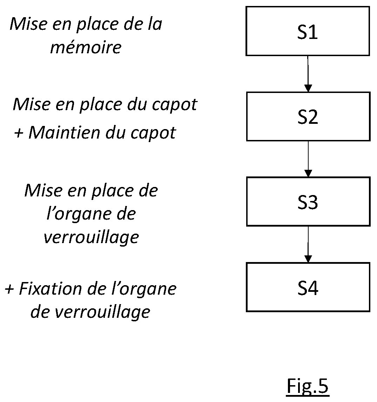

On présente désormais en relation avec les **figures 5** à **8** les étapes de montage des moyens amovibles de blocage d'accès au premier module de mémorisation, décrits ci-avant.

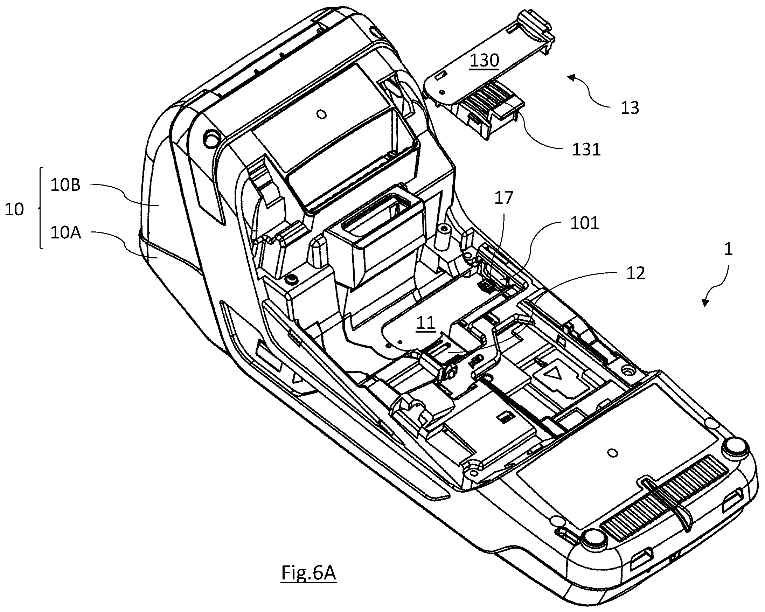

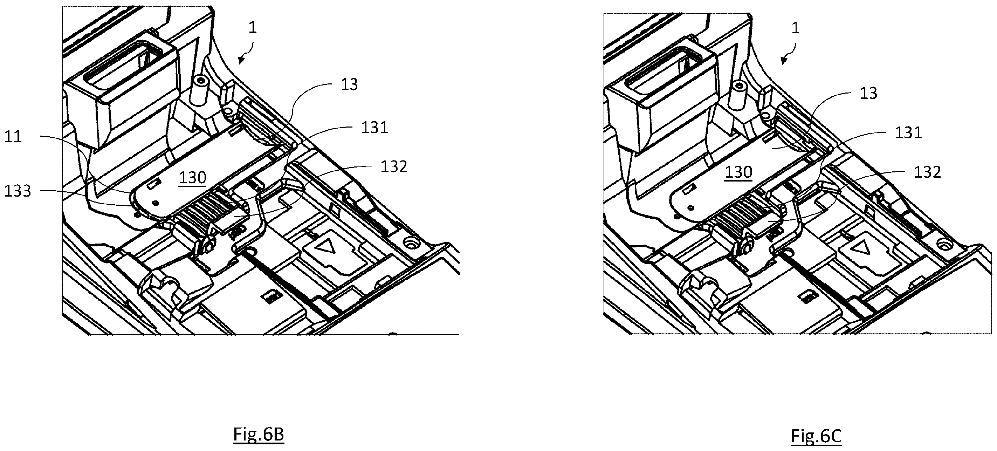

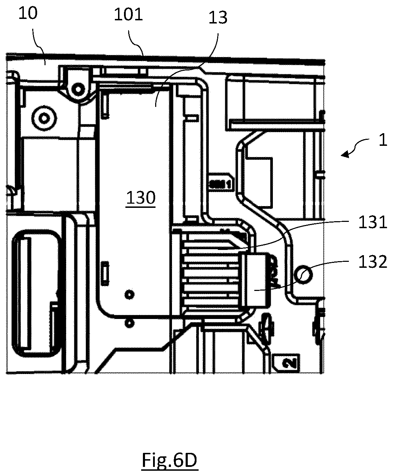

L'organigramme de la figure 5 se focalise sur les étapes principales de montage des moyens amovibles de blocage dans un terminal de paiement électronique. Les figures 6 à 8 représentent des vues d'un terminal de paiement électronique et des moyens amovibles de blocage illustrant les étapes principales de montage, pour une meilleure compréhension de la technique proposée.

Au cours d'une première étape, référencée S1, le premier module amovible de mémorisation 12 est inséré à l'intérieur du logement 11. Cette étape requiert le retrait préalable de la trappe amovible (non illustrée) de la demi-coque inférieure 10B.

Puis, au cours d'une deuxième étape, référencée S2 et illustrée en relation avec les figures 6A à 6D, on assemble le capot 13 au boîtier 10 de manière à fermer le logement 11 et empêcher tout accès au premier module amovible de mémorisation 12. Cette deuxième étape S2 comprend deux sous-étapes, à savoir une première sous-étape de positionnement du capot 13 dans le logement 11, par-dessus le premier module amovible de mémorisation 12, suivie d'une deuxième sous-étape de maintien du capot 13.

Tel que représentée en relation avec les figures 6A et 6B, la première sous-étape de positionnement requiert d'insérer le capot 13 à l'intérieur du logement 11 de manière à ce que la portion de recouvrement 131 recouvre le premier module amovible de mémorisation 12. Lorsque le capot 13 est entièrement inséré dans le logement 11, tel qu'illustré en figure 6B, le capot 13 est en position de fermeture et empêche tout accès au premier module amovible de mémorisation 12, et aux données qu'il contient. En outre, après cette sous-étape de positionnement, l'organe de commutation 17 est également recouvert (voir figure 6B), et donc protégé, par le capot 13.

Ensuite, tel qu'illustré en relation avec les figures 6C et 6D, la deuxième sous-étape de maintien est réalisée en coulissant le capot 13 dans le logement 11, en direction des moyens de retenue ménagés à l'intérieur du boîtier 10 (par exemple des orifices, non visibles), jusqu'à insertion des saillies 133 du capot 13 dans les orifices. Ainsi, le capot 13 est maintenu en positon de fermeture.

Au cours d'une troisième étape, référencée S3 et illustrée en relation avec la figure 7, on assemble l'organe de verrouillage 14 sur le boîtier 10 du terminal 1 de manière à verrouiller le capot 13 en position de fermeture. Cette troisième étape S3 comprend deux sous-étapes, à savoir une première sous-étape de positionnement de l'organe de verrouillage 14 suivie une seconde sous-étape de fixation de l'organe de verrouillage 14. La première sous-étape de positionnement de l'organe de verrouillage 14 requiert, dans l'exemple illustré en Figure 7, d'insérer l'ergot 143 dans l'ouverture de verrouillage 102 depuis l'extérieur du boîtier 10. L'organe de verrouillage 14 est ensuite basculé jusqu'à ce que l'anneau de fixation 141 et l'ouverture de fixation 103 soient coaxiaux.

Lorsque première cette sous-étape de positionnement de l'organe de verrouillage 14 est réalisée, l'ergot 143 de l'organe de verrouillage 14 est en appui contre la butée 134 du capot 13, préalablement inséré dans le logement 11 à l'intérieur du boitier 10 du terminal 1. Ainsi, tout coulissement du capot 13 à l'intérieur du logement 11, en vue de l'extraction du capot 13, est vain car empêché par l'ergot 143. En outre, après positionnement de l'organe de verrouillage 14, l'ergot 143 prend partiellement appui sur la tranche de l'ouverture de verrouillage 102 ce qui permet d'éviter la création d'un axe de rotation (formé par les moyens de fixation réversible) pouvant simplifier l'extraction de l'organe de verrouillage 14.

Puis, la deuxième sous-étape de fixation de l'organe de verrouillage 14 requiert d'insérer, depuis l'extérieur du boîtier 10, les moyens de fixation 15 réversibles au travers de l'anneau de fixation 141 pour solidariser l'organe de verrouillage 14 au boîtier 10 du terminal 1.

Pour ce faire, dans l'exemple illustré, les moyens de fixation 15 réversibles comprennent une bague de fixation 15A tronconique et une vis 15B. La forme tronconique de la bague de fixation 15A permet à l'extrémité la plus évasée (présentant un diamètre supérieur au diamètre intérieur de l'anneau de fixation 141) d'assurer le maintien de l'organe de verrouillage 14 en position de verrouillage. L'extrémité la moins évasée de la bague de fixation 15A permet, quant à elle, de retenir la tête de la vis 15B.

Plus précisément, la deuxième sous-étape de fixation de l'organe de verrouillage 14 se réalise par l'insertion de la bague de fixation 15A dans l'anneau de fixation 141 de l'organe de verrouillage 14 puis dans l'ouverture de fixation 103. Ensuite, la vis de fixation 15B est insérée dans la bague de fixation 15A pour pouvoir être vissée dans un trou taraudé 104 complémentaire ménagé à l'intérieur du boîtier 10. Après vissage de la vis de fixation 15B, l'anneau de fixation 141 est pincé entre la bague de fixation 15A et la paroi latérale 10₄ du boîtier 10 permettant ainsi la fixation de l'organe de verrouillage 14 sur le boîtier 10. Après réalisation de cette deuxième sous-étape de fixation de l'organe de verrouillage 14, tout déplacement de l'organe de verrouillage 14, et donc du capot 13, est vain.

Une telle disposition de l'organe de verrouillage 14, à savoir sur l'extérieur du boîtier 10, permet aux autorités en charge du recouvrement des créances fiscales d'identifier rapidement un terminal 1 ayant fait l'objet d'une tentative frauduleuse d'accès au premier module de mémorisation 12, notamment grâce au dispositif d'authenticité 16 décrit ci-après.

Ainsi, au cours d'une quatrième étape, référencée S4 et également illustrée en relation avec la figure 7, on recouvre en partie les moyens de fixation 15 par un dispositif d'authenticité 16 de manière à empêcher l'accès, et donc le retrait, de ces moyens de fixation 15.

Dans l'exemple illustré, le dispositif d'authenticité 16 est un dispositif physique, à savoir un plomb estampillé d'une empreinte apposée par un tampon détenu exclusivement par les autorités en charge du recouvrement des créances fiscales. Lors de l'estampillage, le plomb, positionné à l'intérieur de la bague de fixation 15A, est solidarisé (par effet de déformation) à la tête de la vis de fixation 15B.

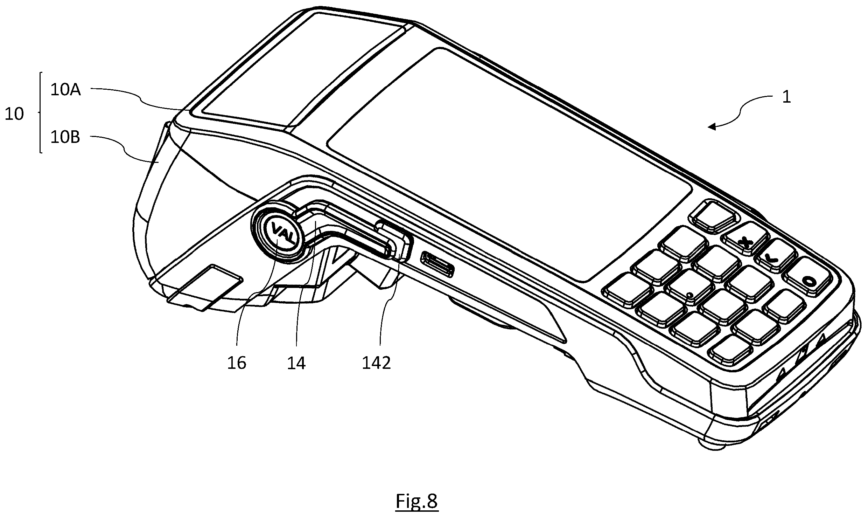

Au terme de ces quatre étapes de montage des moyens de blocage amovibles 13, 14, 15 et du dispositif d'authenticité 16, tel qu'illustré en figure 8, le premier module amovible de mémorisation 12 et les données qu'il contient sont protégés.

On constate donc que de tels agencements et procédé de montage des moyens de blocage amovibles 13, 14, 15 et du dispositif d'authenticité 16 permettent d'assurer l'intégrité du premier module amovible de mémorisation 12 tout en proposant un accès aisé à celui-ci en le disposant dans l'enceinte intérieure non-sécurisée 101 du terminal 1.

Pour accéder aux données contenues dans le module amovible de mémorisation 12, il convient de réaliser les quatre étapes décrites ci-avant dans l'ordre et la cinématique inverse ce qui implique la destruction du dispositif d'authenticité 16.

Un tel prérequis (destruction du dispositif d'authenticité) permet aux autorités en charge du recouvrement des créances fiscales d'identifier aisément et rapidement un terminal 1 ayant fait l'objet d'une tentative frauduleuse d'accès aux données contenues dans le premier module amovible de mémorisation 12.

### 5.3 Autres caractéristiques et modes de réalisation

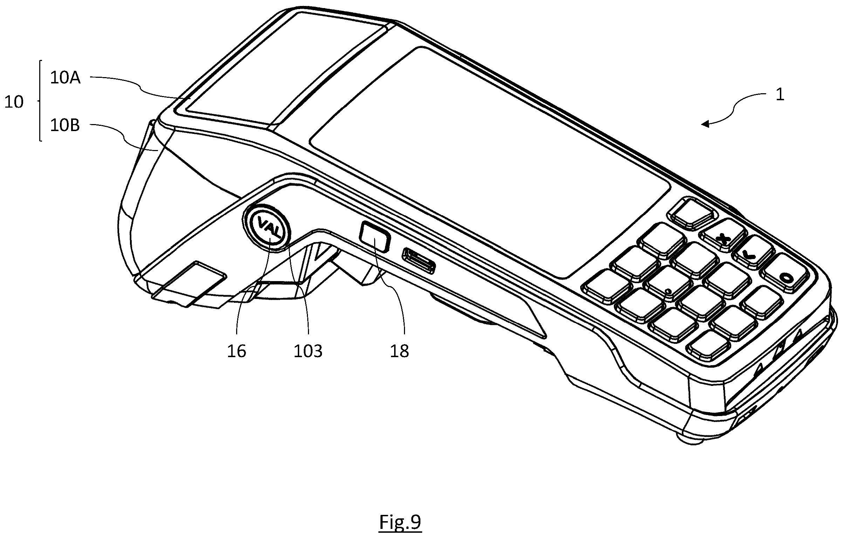

La **figure 9** représente un terminal de paiement électronique non revendiqué, dépourvu de premier module de mémorisation, de capot amovible 13 et d'organe de verrouillage 14 tels que décrits ci-dessus. L'absence de tels éléments peut notamment se justifier lorsque la réglementation nationale d'un état n'exige pas un accès simplifié aux données fiscales du terminal de paiement électronique.

Cependant, pour des raisons de limitation du nombre d'architectures différentes de terminaux de paiement électronique, les moyens de fixation réversibles 15 (non visibles sur cette figure 9) et le dispositif d'authenticité 16 sont néanmoins conservés de manière à respectivement obturer l'ouverture de fixation 103 et authentifier l'obturation.

Par ailleurs, le terminal 1 est reprogrammé de manière à ce que l'organe de commutation 17 (non visible sur cette figure 9) permette de réaliser une opération autre que celle de maintenance initialement prévue. Pour simplifier l'accès à l'organe de commutation, celui-ci est recouvert d'une touche 18, pouvant par exemple permettre à un utilisateur du terminal de paiement électronique de piloter la caméra.

Ainsi, il apparaît qu'un terminal de paiement électronique mobile selon à la technique proposé permet, grâce au caractère amovible de certains éléments, de se conformer à différentes législations.

Dans certains modes de réalisation comme ceux illustrés en figures 1 à 8, le terminal intègre deux modules de mémorisation de données, par exemple fiscales, relatives à au moins une transaction effectuée au moyen du terminal, à savoir un premier module amovible de mémorisation, disposé dans l'enceinte intérieure non-sécurisée et protégé par des moyens de blocage d'accès conformes à la technique proposée, et un second module de mémorisation, disposé dans l'enceinte intérieure sécurisée et protégé par des moyens de blocage définitif.

Toutefois, dans un mode de réalisation alternatif non illustré, le terminal comprend uniquement le premier module amovible de mémorisation disposé dans l'enceinte intérieure non-sécurisée et protégé par des moyens de blocage d'accès conformes à la technique proposée.

Dans le mode de réalisation décrit et illustré précédemment, l'organe de verrouillage 14 est rapporté, depuis l'extérieur du boîtier, sur une paroi latérale du terminal de paiement électronique. Puis, l'organe de verrouillage est solidarisé à cette paroi latérale via l'insertion, depuis l'extérieur du boîtier, de moyen de fixation réversibles 15.

Dans un mode de réalisation alternatif non illustré, un organe de verrouillage 14' est monté à l'intérieur du boîtier, au voisinage du capot 13, déjà inséré dans le logement 11 par-dessus le module amovible de mémorisation 12. Puis, l'organe de verrouillage 14' est solidarisé au fond de la demi-coque inférieure du boîtier par des moyens de fixation réversibles 15' et un dispositif d'authenticité 16'. De ce fait, le dispositif d'authenticité 16' est situé à l'intérieur du boîtier. Ainsi, aucun des moyens de blocage n'est visible depuis l'extérieur du boîtier (lorsque la trappe est montée pour refermer le capot inférieur du boitier). Un tel agencement permet en outre de s'affranchir d'ouvertures (par exemple 102, 103) ménagées dans les parois du boîtier du terminal.

Dans un autre mode de réalisation alternatif non illustré, l'organe de verrouillage est monté sur une paroi autre que celle latérale. Par exemple, l'organe de verrouillage peut être monté sur la paroi arrière du boîtier de sorte que l'organe de verrouillage soit masqué lorsque le terminal est en position normale d'utilisation.

Selon encore un autre mode de réalisation alternatif non illustré, l'organe de verrouillage est monté sur plusieurs parois du boîtier de manière à notamment s'adapter au positionnement des composants du terminal. Par exemple, l'organe de verrouillage peut être monté simultanément sur une paroi latérale et une paroi supérieure du boîtier.

Bien évidemment, la technique proposée n'est pas limitée aux modes de réalisation décrits précédemment et fournis uniquement à titre d'exemple. Elle englobe diverses modifications, couvertes par la portée les revendications.

## Revendications

1. Terminal (1) de paiement électronique comprenant un boitier (10) définissant un espace intérieur comprenant au moins une enceinte intérieure sécurisée, par des moyens de détection d'intrusion, et une enceinte intérieure non-sécurisée (101) accessible par une trappe amovible, ledit boitier (10) présentant un logement (11), situé dans ladite enceinte intérieure non-sécurisée (101), à l'intérieur duquel est disposé un premier module amovible de mémorisation (12) de données relatives à au moins une transaction effectuée via ledit terminal (1), ledit terminal (1) présentant en outre des moyens amovibles de blocage (13, 14, 15) d'accès audit premier module amovible de mémorisation (12) et un dispositif d'authenticité (16) couvrant au moins une partie desdits moyens amovibles de blocage (13, 14, 15) d'accès audit premier module amovible de mémorisation (12).

2. Terminal (1) de paiement électronique selon la revendication 1, **caractérisé en ce que** lesdits moyens amovibles de blocage (13, 14, 15) comprennent :
- un capot amovible (13) de fermeture dudit logement (11) de sorte à empêcher l'accès audit module amovible de mémorisation (12), et
- un organe de verrouillage (14) amovible configuré pour verrouiller ledit capot amovible (13) en position de fermeture, ledit organe de verrouillage (14) étant solidarisé audit boîtier (10) par des moyens réversibles de fixation (15).

3. Terminal (1) de paiement électronique selon la revendication 2, **caractérisé en ce que** ledit dispositif d'authenticité (16) couvre au moins une partie desdits moyens réversibles de fixation (15) dudit organe de verrouillage (14) audit boîtier (10).

4. Terminal (1) selon la revendication 1, **caractérisé en ce qu'**il comprend un organe de commutation (17) du fonctionnement dudit terminal, et **en ce que** lesdits moyens amovibles de blocage (13, 14, 15) bloquent l'accès audit organe de commutation (17).

5. Terminal (1) selon l'une quelconque des revendications 1 à 4, **caractérisé en ce que** au moins un moyen amovible de blocage (13, 14, 15), dit moyen amovible de blocage externe, est rapporté sur l'extérieur dudit boîtier (10), et **en ce que** ledit dispositif d'authenticité (16) couvre au moins une partie dudit au moins un moyen amovible de blocage externe (13, 14, 15).

6. Terminal (1) selon l'une quelconque des revendications 1 à 4, **caractérisé en ce que** ledit boîtier (10) définit un espace intérieur, et **en ce que** lesdits moyens amovibles de blocage (13, 14, 15) et ledit dispositif d'authenticité (16) sont disposés dans ledit espace intérieur.

7. Terminal (1) selon la revendication 1, **caractérisé en ce que** ledit dispositif d'authenticité (16) est un dispositif mécanique, tel un plomb estampillé d'une empreinte particulière.

## Patentansprüche

1. Endgerät (1) zum elektronischen Bezahlen, umfassend ein Gehäuse (10), das einen inneren Raum definiert, der wenigstens einen Innenbereich, der durch Eindringdetektionsmittel gesichert ist, und einen nicht gesicherten Innenbereich (101), der über eine entfernbare Klappe zugänglich ist, umfasst, wobei das Gehäuse (10) eine Aufnahme (11) aufweist, die sich in dem nicht gesicherten Innenbereich (101) befindet, in deren Innerem ein entfernbares erstes Speichermodul (12) zum Speichern von Daten bezüglich wenigstens einer über das Endgerät (1) ausgeführten Transaktion angeordnet ist, wobei das Endgerät (1) ferner entfernbare Blockiermittel (13, 14, 15) zur Blockierung des Zugriffs auf das entfernbare erste Speichermodul (12) und eine Authentizitätsvorrichtung (16), die wenigstens einen Teil der entfernbaren Blockiermittel (13, 14, 15) zur Blockierung des Zugriffs auf das entfernbare erste Speichermodul (12) bedeckt, umfasst.

2. Endgerät (1) zum elektronischen Bezahlen, nach Anspruch 1, **dadurch gekennzeichnet, dass** die entfernbaren Mittel (13, 14, 15) zur Zugriffsblockierung umfassen:
- eine entfernbare Kappe (13) zum Verschließen der Aufnahme (11), um den Zugriff auf das entfernbare Speichermodul (12) zu verhindern, und
- ein entfernbares Verriegelungsorgan (14), das zum Verriegeln der entfernbaren Kappe (13) in Verschließposition ausgelegt ist, wobei das Verriegelungsorgan (14) mit dem Gehäuse (10) durch reversible Befestigungsmittel (15) fest verbunden ist.

3. Endgerät (1) zum elektronischen Bezahlen, nach Anspruch 2, **dadurch gekennzeichnet, dass** die Authentizitätsvorrichtung (16) wenigstens einen Teil der reversiblen Befestigungsmittel (15) zum Befestigen des Verriegelungsorgans (14) an dem Gehäuse (10) bedeckt.

4. Endgerät (1) nach Anspruch 1, **dadurch gekennzeichnet, dass** es ein Umschaltorgan (17) zum Umschalten des Betriebs des Endgeräts umfasst, und dass die entfernbaren Blockiermittel (13, 14, 15) den Zugriff auf das Umschaltorgan (17) blockieren.

5. Endgerät (1) nach einem der Ansprüche 1 bis 4, **dadurch gekennzeichnet, dass** wenigstens ein entfernbares Blockiermittel (13, 14, 15), so genanntes außen liegendes Blockiermittel, an der Außenseite des Gehäuses (10) angebracht ist, und dass die Authentizitätsvorrichtung (16) wenigstens einen Teil des wenigstens einen entfernbaren außen liegenden Blockiermittels (13, 14, 15) bedeckt.

6. Endgerät (1) nach einem der Ansprüche 1 bis 4, **dadurch gekennzeichnet, dass** das Gehäuse (10) einen inneren Raum definiert, und dass die entfernbaren Blockiermittel (13, 14, 15) und die Authentizitätsvorrichtung (16) in dem inneren Raum angeordnet sind.

7. Endgerät (1) nach Anspruch 1, **dadurch gekennzeichnet, dass** die Authentizitätsvorrichtung (16) eine mechanische Vorrichtung ist, wie eine mit einer besonderen Prägung versehene Plombe.

## Claims

1. Electronic payment terminal (1) comprising a box (10) defining an inner space comprising at least one secured inner chamber, protected by intrusion detection means, and one non-secured inner chamber (101) accessible via a removable flap, said box (10) having a housing (11) located in said non-secured inner chamber (101), inside which a first removable module (12) for storing data related to at least one transaction made via said terminal (1) is arranged, said terminal (1) also having removable means (13, 14, 15) for blocking access to said first removable storage module (12) and an authenticity device (16) covering at least one portion of said removable means (13, 14, 15) for blocking access to said first removable storage module (12).

2. Electronic payment terminal (1) according to claim 1, **characterised in that** said removable blocking means (13, 14, 15) comprise:
- a removable cover (13) for closing said housing (11) to prevent access to said removable storage module (12), and
- a removable locking member (14) configured to lock said removable cover (13) in the closed position, said locking member (14) being attached to said box (10) by reversible attachment means (15).

3. Electronic payment terminal (1) according to claim 2, **characterised in that** said authenticity device (16) covers at least one portion of said reversible means (15) for attaching said locking member (14) to said box (10).

4. Terminal (1) according to claim 1, **characterised in that** it comprises a member (17) for switching the operation of said terminal, and **in that** said removable blocking means (13, 14, 15) block access to said switching member (17).

5. Terminal (1) according to any one of claims 1 to 4, **characterised in that** at least one removable blocking means (13, 14, 15), called the external removable blocking means, is added to the outside of said box (10), and **in that** said authenticity device (16) covers at least one portion of said at least one external removable blocking means (13, 14, 15).

6. Terminal (1) according to any one of claims 1 to 4, **characterised in that** said box (10) defines an inner space, and **in that** said removable blocking means (13, 14, 15) and said authenticity device (16) are arranged in said inner space.

7. Terminal (1) according to claim 1, **characterised in that** said authenticity device (16) is a mechanical device such as a seal stamped with a special imprint.
